# EUROPÄISCHE PATENTSCHRIFT

(11) **EP 2 481 277 B1**
(45) Veröffentlichungstag und Bekanntmachung des Hinweises auf die Patenterteilung: **06.05.2015**
(21) Anmeldenummer: 11188534.9
(22) Anmeldetag: 10.11.2011
(51) Int. Cl.: A01F 12/18

(54) **Dreschwerk eines Mähdreschers**
Thresher system of a combined harvester
Mécanisme de battage d'une moissonneuse-batteuse

(30) Priorität: 01.02.2011 DE 102011000426
(43) Veröffentlichungstag der Anmeldung: 01.08.2012
(73) Patentinhaber: CLAAS Selbstfahrende Erntemaschinen GmbH, 33428 Harsewinkel (DE)
(72) Erfinder: Schwersmann, Berthold, 49186 Bad Iburg (DE); Esken, Dirk, 59494 Soest-Mecklingsen (DE); Nüssing, Daniel, 48231 Warendorf (DE); Krieft, Manfred, 33428 Harsewinkel (DE)

(56) Entgegenhaltungen:
- EP-A1- 0 516 889
- EP-A1- 1 698 222

## Beschreibung

Die Erfindung betrifft ein Dreschwerk eines Mähdreschers mit einer Vorbeschleunigungstrommel, die mit einem ersten Dresch- und Abscheidekorb zusammenwirkt und der in einem Eintrittsbereich ein Erntegutstrom zuführbar ist, wobei die Vorbeschleunigungstrommel einen zylindrischen Grundkörper mit auf dessen Außenmantel angeordneten, im Wesentlichen radial verlaufenden Mitnehmern aufweist, die sowohl in axialer Richtung als auch in Umfangsrichtung des Grundkörpers zueinander beabstandet sind und den Erntegutstrom tangential zu einem Austrittsbereich des ersten Dresch- und Abscheidekorbes fördern, von dem aus der Erntegutstrom einer mit einem zweiten Dresch- und Abscheidekorb zusammenwirkenden Dreschtrommel zugeführt wird. Weiterhin bezieht sich die Erfindung auf ein Dreschwerk eines Mähdreschers mit einer Strohwendetrommel, die einer Dreschtrommel sowie einem dieser zugeordneten Dreschkorb nachgeschaltet ist und über die ein Gemisch aus Restkorn, Stroh und Spreu aus dem Dreschkorb einer Nachabscheideeinrichtung, vorzugsweise mehreren Hordenschüttlern beziehungsweise Abscheiderotoren zuführbar ist.

Dreschwerke mit Mehrtrommelanordnungen, bei denen das über einen Schrägförderer zugeführte Halmgut tangential von mehreren mit Dresch- und Abscheidekörben zusammenwirkenden Trommeln gefördert und aufbereitet wird, sind allgemein bekannt. Die Vorbeschleunigungstrommel ist dabei über einen Teil ihres Umfangs von einem ersten Dresch- und Abscheidekorb umschlossen, wobei die beiden Bauelemente derart zueinander beabstandet sind, dass zwischen ihnen ein Dresch- und Förderspalt gebildet wird. Die Vorbeschleunigungstrommel übernimmt dabei folgende Funktionen: Von dieser wird bereits eine Dreschfunktion übernommen; es wird ein dünner und gleichmäßiger Aufbau der Erntegutmatte erzielt; die Längsbewegung der Erntegutmatte in Richtung der nachfolgenden Dreschtrommel wird beschleunigt.

Eine Ausbildung und Anordnung einer Vorbeschleunigungstrommel der im Oberbegriff des Patentanspruchs 1 genannten Gattung ist aus der EP 0 516 889 A1 bekannt. Sowohl die Vorbeschleunigungstrommel als auch die dieser nachgeschaltete Dreschtrommel werden, von ihrer Antriebsseite her betrachtet, im Gegenuhrzeigersinn angetrieben. Dabei wird das von dem Schrägförderer der Vorbeschleunigungstrommel zugeführte Erntegut zunächst durch einen ersten Dreschspalt zwischen der Vorbeschleunigungstrommel und dem ersten Dresch- und Abscheidekorb gefördert. Die Vorbeschleunigungstrommel besteht dabei aus einem hohlzylindrischen Grundkörper, auf dessen Außenmantelfläche eine Vielzahl sowohl in Umfangsrichtung als auch in axialer Richtung des Grundkörpers zueinander beabstandete Mitnehmer angeordnet sind. Diese Mitnehmer können gemäß der Druckschrift mit unterschiedlichen Wirkflächen versehen sein, die austauschbar und auf den jeweiligen Zustand des Erntegutes abstimmbar sind. Bei der Förderung der Erntegutmatte von der Vorbeschleunigungstrommel in die Dreschtrommel erfolgt im Übergabebereich eine starke Umlenkung der Bewegungsrichtung, die zu erheblichen Problemen führen kann. Zum einen werden die Getreideähren von den Mitnehmern der Vorbeschleunigungstrommel nach Verlassen des ersten Dresch- und Abscheidekorbes in einen Teilumlauf gezwungen und erst am Ende des Übergabebereiches, also in einem Bereich, in welchen Mitnehmer und Schlagleisten benachbart sind, von der Dreschtrommel erfasst. Von dort aus treffen die Getreideähren mit großer Geschwindigkeit auf die Korbleisten und Korbdrähte des zweiten Dresch- und Abscheidekorbes auf. Dadurch kann im Extremfall, das heißt bei großer Halmlänge und/oder feuchtem Lagergetreide, ein kompletter Umlauf der Erntegutmatte an der Vorbeschleunigungstrommel zustande kommen, was letztendlich zum Einklemmen des umlaufenden Erntegutes mit der Folge eines Trommelwicklers führen kann.

Aus der EP 1 698 222 A1 ist ebenfalls ein aus einer Vorbeschleunigungstrommel und einer Dreschtrommel bestehendes Dreschwerk bekannt, wobei im rückwärtigen Bereich der Dreschtrommel eine Strohwendetrommel angeordnet ist, die das aus dem Dreschspalt austretende Halmgut mit dem darin eventuell noch verbliebenen Restkorn und die Spreu weiteren Abscheideorganen, wie zum Beispiel mehreren Hordenschüttlern zuführt. Diese Strohwendetrommel ist dabei in der üblichen Weise als hohler Blechkörper mit einer Vielzahl von Förderleisten versehen, also sternförmig ausgebildet. Gemäß diesem Dokument sollen die einzelnen Förderleisten an einem oberhalb der Strohwendetrommel befestigten Abstreiforgan derart abdichten, dass ein Luftstrom innerhalb des Dreschwerkes in Richtung des Schneidwerkes, der anderenfalls zu einer erheblichen Staubbelastung vor der Fahrerkabine oder dem Fahrerstand führen würde, vermieden wird.

Es ist Aufgabe der vorliegenden Erfindung, bei Verwendung einer mit radialen Mitnehmern versehenen Trommel als Vorbeschleunigungstrommel oder als Strohwendetrommel sowohl ein Wickeln der Erntegutmatte als auch eine Beschädigung der Getreidekörner zu vermeiden.

Diese Aufgabe wird, ausgehend vom Oberbegriff des Patentanspruchs 1, in Verbindung mit dessen kennzeichnenden Merkmalen gelöst. Im Übrigen führen auch die Merkmale des unabhängigen Anspruchs 2 zu einer Lösung dieser Aufgabe, soweit dabei auf eine Anwendung der Erfindung für eine Strohwendetrommel Bezug genommen wird.

Gemäß dem kennzeichnenden Teil des Patentanspruchs 1 soll im Austrittsbereich des ersten Dresch- und Abscheidekorbes ein mit Zinken versehener, kammartig ausgebildeter Abstreifer angeordnet sein, wobei jeder der Zinken in einen axialen Zwischenraum zwischen jeweils zwei einander benachbarten Reihen von Mitnehmern eingreift. Mit Reihen von Mitnehmern ist dabei eine Anzahl aufeinanderfolgender Mitnehmer gemeint, die konzentrisch zur Achse der Vorbeschleunigungstrommel angeordnet sind und folglich zumindest annähernd in einer gemeinsamen Quermittelebene der Vorbeschleunigungstrommel liegen. Diese Mitnehmer sind auch jeweils in axialer Richtung zueinander beabstandet. Der Abstreifer erzeugt einen geführten Materialfluss, wodurch die Neigung zur Bildung von Wickeln der Erntegutmatte an der Vorbeschleunigertrommel signifikant reduziert wird.

Der Abstreifer, dessen Zinken bis an die Außenmantelfläche des zylindrischen Grundkörpers geführt sind, ist vorzugsweise in einem Bereich oberhalb der Vorbeschleunigungstrommel fixiert. Bezogen auf eine durch die Achse der Vorbeschleunigungstrommel gelegte waagerechte Ebene kann der Abstreifer in einem Punkt oberhalb der Vorbeschleunigungstrommel, der auf einem Winkel von 60° bis 80°zu dieser waagerechten Ebene liegt, fixiert sein. Von dort aus erstreckt sich jeder der Zinken tangential zum Grundkörper. Dadurch sind die Zinken dazu in der Lage, das Erntegut von der Vorbeschleunigungstrommel abzustreifen, also von den Mitnehmern zu lösen, und in Richtung der Dreschtrommel zu leiten. Die Erntegutmatte kann somit von den Mitnehmern nicht in eine Position angehoben werden, in der sie dann aus erheblichem Abstand zum Dresch- und Abscheidekorb von den Schlagleisten der Dreschtrommel übernommen und mit großer Geschwindigkeit auf den zweiten Dresch- und Abscheidekorb geschleudert wird. Die vorteilhafte Folge davon ist, dass der kammartig zwischen den Mitnehmern der Vorbeschleunigungstrommel eingreifende Abstreifer verhindert, dass Teile der Erntegutmatte oder die gesamte Erntegutmatte in einen Umlauf an der Vorbeschleunigungstrommel gezwungen werden, so dass Verstopfungen im Dreschwerk vermieden werden. Zudem kann das Auftreten von Bruchkorn reduziert werden kann. Die an dem zylindrischen Grundkörper vorgesehenen Mitnehmer können auch durch Scheiben gebildet werden, die eine sternförmige Außenkontur aufweisen. Dabei besteht die Möglichkeit, die Scheiben jeweils um einen Winkel zueinander verdreht auf dem Grundkörper zu fixieren. Es kann auf diese Weise ein etwa schraubenlinienartiger Verlauf der Spitzen der Mitnehmer geschaffen werden.

Gemäß der Lösung nach dem unabhängigen Anspruch 2 soll die Strohwendetrommel einen zylindrischen Grundkörper mit auf dessen Außenmantel angeordneten, im Wesentlichen radial verlaufenden Mitnehmern aufweisen, die sowohl in axialer Richtung als auch in Umfangsrichtung des Grundkörpers zueinander beabstandet sind, und es soll ausgangsseitig der Strohwendetrommel ein mit Zinken versehener, kammartig ausgebildeter Abstreifer angeordnet sein, wobei jeder der Zinken in einen axialen Zwischenraum zwischen jeweils zwei einander benachbarten Reihen von Mitnehmern eingreift. Die erfindungsgemäß ausgebildete Strohwendetrommel ist folglich ebenfalls mit Mitnehmern versehen, die für eine wirksame Förderung in die Nachabscheideeinrichtung sorgt. Da sich bei einer entsprechenden Ausbildung der Strohwendetrommel mit auf dem zylindrischen Grundkörper angeordneten Mitnehmern nicht das gesamte Halmgut zu den nachfolgenden Hordenschüttlern transportiert wird, sondern unter Umständen von den Mitnehmern mitgerissen und somit von der Strohwendetrommel zurückgefördert wird, ist zwischen diesen ebenfalls ein Abstreifer vorgesehen, der über seine Zinken die Stroh- beziehungsweise Spreumatte funktionssicher von der Strohwendetrommel trennt. Auch hier erzeugt der Abstreifer einen geführten Materialfluss, wodurch die Neigung zur Wickelbildung um die Wendetrommel zumindest signifikant gemindert. Die erfindungsgemäße Anordnung des Abstreifers an der Strohwendetrommel beschränkt sich natürlich nicht auf eine Verwendung in einem Dreschwerk mit einer Mehrtrommelanordnung. Sie kann selbstverständlich auch für Dreschwerke mit nur einer Dreschtrommel vorgesehen werden.

Weiterhin soll jeder der Zinken eine sichelförmige Außenkontur aufweisen und mit einem gekrümmten ersten Abschnitt den zylindrischen Grundkörper an einem Teil seines Umfanges umgreifen. Die Spitze dieser Sichel ist dabei zwischen der jeweiligen Erntegutmatte und dem zylindrischen Grundkörper entgegen deren Strömungsrichtung gerichtet und trennt somit die Erntegutmatte von der Vorbeschleunigungstrommel oder der Strohwendetrommel. Ausgehend von dieser Spitze liegt der jeweilige Zinken über einen ersten gekrümmten Abschnitt an dem zylindrischen Grundkörper an, wobei jeder der Zinken, wie bereits dargelegt, oberhalb der Vorbeschleunigungstrommel oder der Strohwendetrommel fixiert sein soll.

In weiterer Ausgestaltung der Erfindung sollen die Zinken einen von deren Spitze ausgehenden Führungsabschnitt aufweisen, der in einem vom Grundkörper abgewandten Bereich des Zinkens liegt. Im Falle der Verwendung des Abstreifers an der Vorbeschleunigungstrommel soll dieser Führungsabschnitt unter Bildung eines Dreschkanals zu den Korbleisten und Korbdrähten des ersten Dresch- und Abscheidekorbes verlaufen. Dieser Kanal kann einen gleichmäßigen Querschnitt aufweisen oder sich in bestimmten Bereichen verengen bzw. erweitern. Im Zusammenhang mit der erfindungsgemäßen Ausbildung einer Strohwendetrommel sollen die Zinken einen von der Spitze ausgehenden Führungsabschnitt aufweisen, der mit Abstand zu einem Strohleitblech verläuft. Auch in diesem Fall können sowohl der Verlauf des Strohleitbleches als auch des Führungsabschnittes so gestaltet sein, dass sich für das von der Strohwendetrommel geförderte Stroh optimale Strömungsverhältnisse ergeben.

Je nach Gestaltung der Mitnehmer und der Zinken können zur Vermeidung einer eventuell in diesem Bereich auftretenden Schneidwirkung besondere geometrische Verhältnisse vorgesehen sein. Um dieses Problem insgesamt zu vermeiden, wird vorgeschlagen, die Lage der Wirkflächen der Mitnehmer und des Führungsabschnittes der jeweiligen Zinken so zu gestalten, dass zwischen beiden beim Passieren der Zinken ein Winkel α ≥ 90°eingehalten wird. Das kann zum einen durch eine entsprechende Gestaltung der Wirkflächen der Mitnehmer sowie der auf diesen befestigten Kappen oder durch den Verlauf der Führungsabschnitte der Zinken erreicht werden.

Besonders vorteilhaft ist eine Führung der Zinken am ringförmigen Grundkörper, bei der der jeweils gekrümmte erste Abschnitt eines jeden Zinkens in eine ringartig den Grundkörper umschließenden Führungskulisse eingreift. Eine derartige Führungskulisse kann einen U-förmigen Querschnitt aufweisen und aus Blech oder Kunststoff hergestellt sein. Durch die mit der Führungskulisse erzielte exakte Führung der Zinken wird vermieden, dass diese eventuell mit den Mitnehmern kollidieren.

Besonders vorteilhaft ist eine Ausbildung des Abstreifers, bei welcher die Zinken auf einem rohrförmig ausgebildeten Halter angeordnet sind. Es kann sich dabei um einen zylindrischen oder rechteckigen Hohlkörper handeln. Darüber hinaus besteht aber auch die Möglichkeit, den Halter als Massivbauteil, beispielsweise als Winkel- oder Flachprofil auszubilden.

Außerdem können in Weiterbildung der Erfindung die Zinken aus Kunststoff hergestellt sein und sind folglich kostengünstig herstellbar. Darüber hinaus besteht natürlich auch die Möglichkeit, die Zinken als Blechteile herzustellen.

Schließlich soll der Halter des erfindungsgemäßen Abstreifers mittels an seinen Enden angeordneter Flansche in Seitenverkleidungen des Dreschwerkes befestigt sein. Dabei nimmt der Halter eine derartige Stellung gegenüber der Vorbeschleunigungstrommel oder der Strohwendetrommel ein, dass die Zinken oberhalb der Trommeln angeordnet und mit ihren Spitzen in einen Austrittsbereich ragen, so dass dort eine gezielte Trennung der Halmgutmatte von der jeweiligen Trommel hervorgerufen werden kann.

Die Erfindung ist nicht auf die angegebene Kombination der Merkmale der beiden unabhängigen Patentanspruchs 1 und 2 und der abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch Verwendung von Bezugszeichen den Schutzumfang der Patentansprüche auf keinen Fall auf die dargestellten Ausgestaltungsbeispiele beschränken.

Weitere Merkmale der Erfindung ergeben sich im Übrigen aus der nachfolgenden Beschreibung und aus der Zeichnung, in der ein Ausführungsbeispiel der Erfindung vereinfacht dargestellt ist. Es zeigen:
- Figur 1: eine Seitenansicht eines selbstfahrenden Mähdreschers mit einer stark schematisierten Darstellung einer Schnittansicht durch ein Mehrtrommeldreschwerk,
- Figur 2: im Detail eine Seitenansicht eines erfindungsgemäßen Dreschwerks, bei welchem sowohl einer Vorbeschleunigungstrommel als auch einer Strohwendetrommel jeweils ein Abstreifer zugeordnet sind,
- Figur 3: eine perspektivische Ansicht einer einzeln dargestellten Vorbeschleunigungstrommel mit einem zwischen deren Mitnehmern eingreifenden Abstreifer,
- Figur 4: eine perspektivische Ansicht eines aus einer Vielzahl von Zinken bestehenden Abstreifers und
- Figur 5: eine Seitenansicht eines für den Abstreifer vorgesehenen Zinkens.

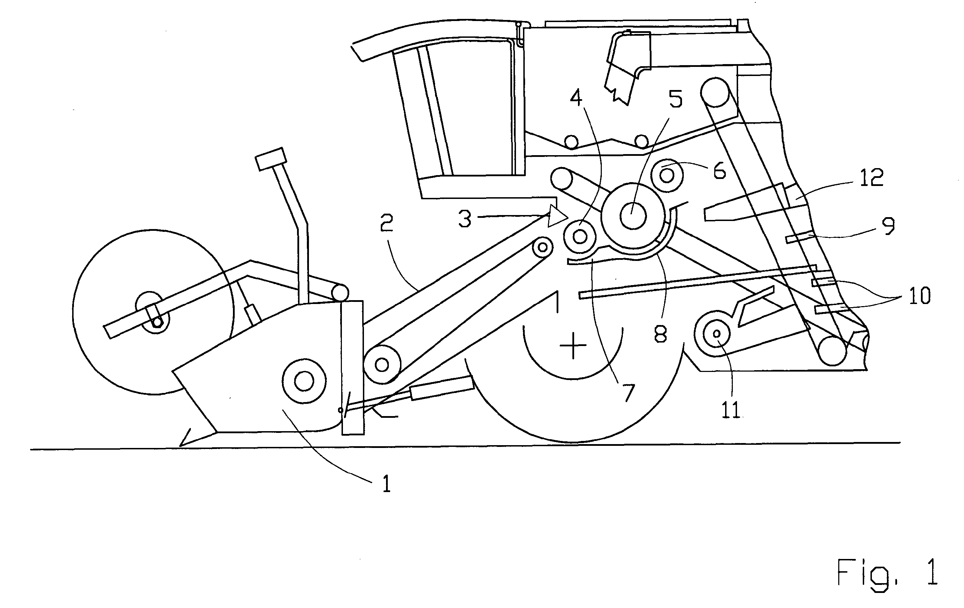

In der Figur 1 ist in schematisierter Weise eine Teilansicht eines selbstfahrenden Mähdreschers dargestellt, wobei dieser Mähdrescher in seinem Frontbereich mit einem eine Haspel aufweisenden Schneidwerk 1 und einem sich daran anschließenden Schrägförderer 2 versehen ist. Im Erntebetrieb wird das auf dem Feld stehende Erntegut, bei dem es sich um Getreide oder um andere Halmfrüchte handeln kann, mittels eines innerhalb des Schneidwerks 1 angeordneten Mähwerks geschnitten und über eine nicht näher dargestellte Einzugsschnecke dem Schrägförderer 2 zugeführt. Der Schrägförderer 2, der mit Förderleisten versehene Ketten aufweisen kann, transportiert das Erntegut in eine Dreschvorrichtung 3.

Wie der Figur 1 entnommen werden kann, weist die Dreschvorrichtung 3 insgesamt drei Trommeln auf, und zwar eine Vorbeschleunigungstrommel 4, eine Dreschtrommel 5 und eine Strohwendetrommel 6. Dabei wirkt die Vorbeschleunigungstrommel 4 mit einem ersten Dresch- und Abscheidekorb 7 zusammen, der die Vorbeschleunigungstrommel 4 über einen Teil ihres Umfangs umschließt. An diesen ersten Dresch- und Abscheidekorb 7 schließt sich in Strömungsrichtung des Erntegutes ein zweiter Dresch-und Abscheidekorb 8 an, der wiederum die Dreschtrommel 5 über einen Teil ihres

Umfangs umgibt. Unterhalb dieser aus dem ersten und zweiten Dresch- und Abscheidekorb 7, 8 gebildeten Anordnung verläuft ein in Schwingungen versetzter Vorbereitungsboden 9, der mittels einer nicht näher dargestellten waschbrettartigen Oberfläche die aus dem Erntegut ausgedroschenen Körner zu Sieben 10 fördert, wobei mittels eines Gebläses 11 eventuell den Körnern beigemischte Anteile von Kurzstroh, Grannen, Hülsen usw. entfernt werden. Der Strohwendetrommel 6 folgt in Strömungsrichtung des Halmgutes eine durch mehrere Hordenschüttler 12 gebildete Nachabscheideeinrichtung, über die restliche Körner aus dem Stroh abgeschieden werden und die das Stroh schließlich einem Häcksler zuführt.

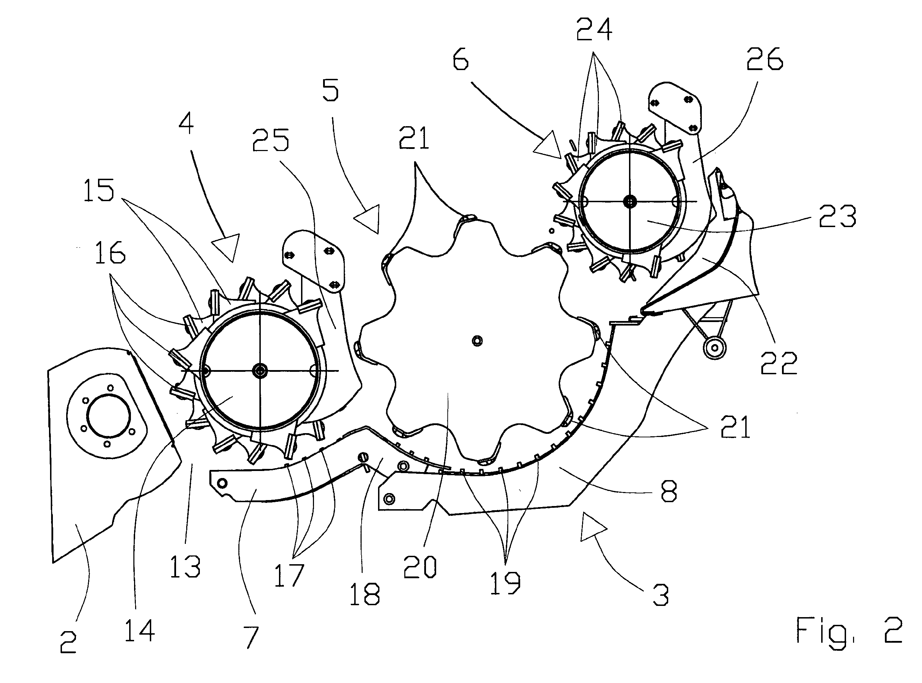

Die Ausbildung des Dreschwerkes soll nachfolgend anhand der Figur 2 näher erläutert werden:
Gemäß dieser Darstellung, in der die gleichen Bezugszeichen wie in Figur 1 verwendet werden, ist ein Endabschnitt des Schrägförderers 2 sichtbar, der nahe einem Eintrittsbereich 13 der Vorbeschleunigungstrommel 4 endet. Die Vorbeschleunigungstrommel 4 weist einen zylindrischen Grundkörper 14 auf, auf dessen Außenmantel Mitnehmer 15 angeordnet sind. Diese Mitnehmer 15 weisen, ausgehend von ihren Wirkflächen 16 jeweils eine keilförmige Außenkontur auf, wobei sie in ihrem äußeren Kantenbereich etwa tangential zum Außenmantel des zylindrischen Grundkörpers 14 verlaufen. Dabei sind die Wirkflächen 16 jeweils geneigt angeordnet. Der erste Dresch- und Abscheidekorb 7 weist Korbleisten 17 auf, zwischen denen nicht näher dargestellte Korbdrähte verlaufen. Außerdem ist der erste Dresch- und Abscheidekorb 7 mit einer sich daran anschließenden Leiteinrichtung 18 versehen, die im Wesentlichen dem Verlauf des darauf folgenden zweiten Dresch- und Abscheidekorbes 8 angepasst ist.

Auch der zweite Dresch- und Abscheidekorb 8 ist mit Korbleisten 19 sowie Korbdrähten versehen. Die Dreschtrommel 5, die mit diesem zusammenwirkt, weist Stützscheiben 20 auf, von denen in der Darstellung nach Figur 2 allerdings nur eine sichtbar ist. Auf diesen Stützscheiben 20 sind insgesamt acht profilierte Schlagleisten 21 angeordnet. Es kann sich dabei um eine offene Dreschtrommel oder eine geschlossene Dreschtrommel handeln. Ausgehend von dem zweiten Dresch- und Abscheidekorb 8 erstreckt sich im Bereich der Strohwendetrommel 6 ein Strohleitblech 22. Dabei ist die Strohwendetrommel 6 hinsichtlich ihrer Gestaltung der Vorbeschleunigungstrommel 4 ähnlich ausgebildet und verfügt somit über einen zylindrischen Grundkörper 23 sowie von dessen Außenmantelfläche ausgehenden Mitnehmern 24.

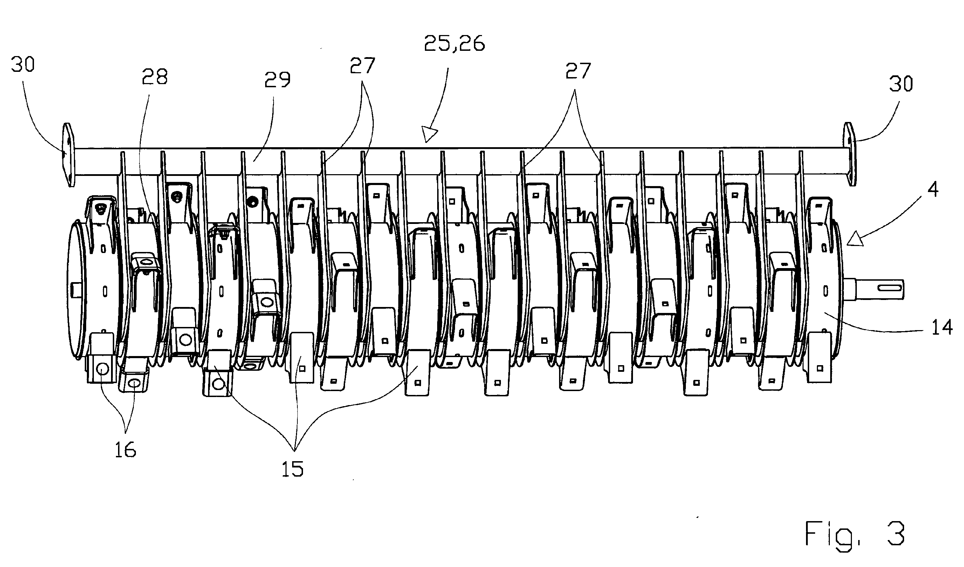

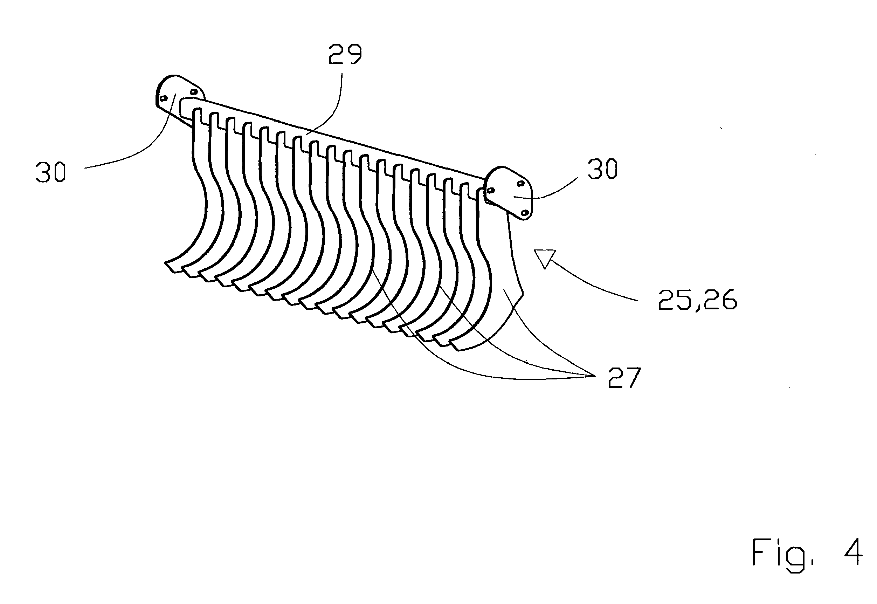

Erfindungsgemäß sind der Vorbeschleunigungstrommel 4 und der Strohwendetrommel 6 Abstreifer 25 und 26 zugeordnet, die einen geführten Materialfluss beim Übergang des Erntegutes hervorrufen. Hinsichtlich der konstruktiven Ausgestaltung der Abstreifer 25 und 26 wird auf die nachfolgenden Figuren 3 bis 5 verwiesen, in denen eine entsprechende Anordnung des Abstreifers 25 an der Vorbeschleunigungstrommel 4 dargestellt ist. Dabei weist der Abstreifer 25 eine Vielzahl von Zinken 27 auf, die jeweils zwischen den Mitnehmern 15 der Vorbeschleunigungstrommel 4 bis an den zylindrischen Grundkörper 14 geführt sind. Zum Zwecke einer exakten Führung der Zinken 27 am Umfang des zylindrischen Grundkörpers 14 sind Führungskulissen 28 vorgesehen, die den Außenmantel des Grundkörpers 14 ringartig umschließen. Diese Führungskulissen 28 sind dabei, vorzugsweise im Querschnitt gesehen, U-förmig ausgebildet. Jeder der Zinken 27 ist an einem rohrförmigen Halter 29 befestigt, der wiederum an seinen Enden Flansche 30 aufweist, über die der rohrförmige Halter 29 in Seitenverkleidungen des Dreschwerkes befestigbar ist.

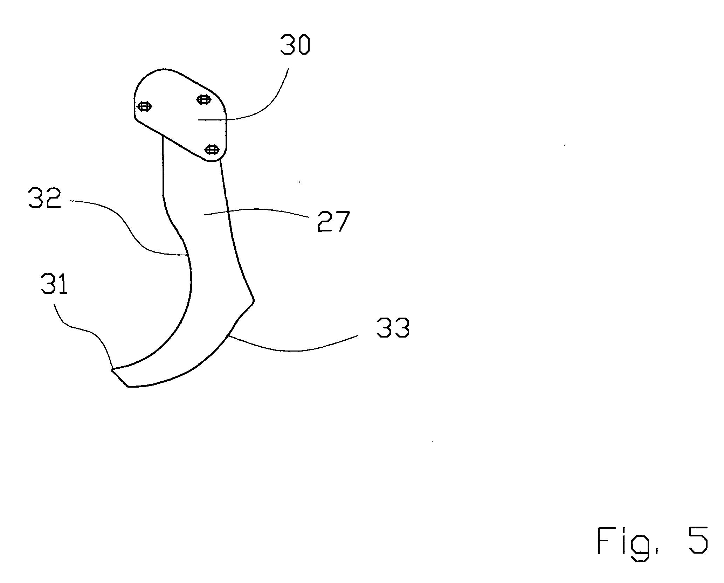

Wie insbesondere aus der Figur 5 hervorgeht, sind die Zinken 26 mit einer sichelförmigen Außenkontur ausgebildet. Dabei geht von einer Spitze 30 ein erster gekrümmter Abschnitt 32 aus, mit welchem die Zinken 26 jeweils am Umfang des Grundkörpers 14 verlaufen. Weiterhin erstreckt sich von der Spitze 30 eines jeden Zinkens 26 aus ein Führungsabschnitt 33, der im eingebauten Zustand des Abstreifers 25 gegenüber dem ersten Dresch- und Abscheidekorb 7 einen Dreschspalt begrenzt.

Wie insbesondere der Figur 2 hinsichtlich der Funktion der erfindungsgemäßen Anordnung entnommen werden kann, greifen die beiden Abstreifer 25 und 26 derart an der Vorbeschleunigungstrommel 4 oder an der Strohwendetrommel 6 ein, dass das Halmgut wirkungsvoll von den Mitnehmern 15 beziehungsweise 24 abgestreift wird und somit nicht in einen Umlauf an der jeweiligen Trommel gelangen kann. Somit kann das Einklemmen von Erntegut und das Umlaufen des Erntegutes wirkungsvoll vermieden werden. Außerdem wird die Entstehung von Bruchkorn vermieden, da die Getreideähren bereits nahe an dem Übergang vom ersten Dresch- und Abscheidekorb 7 zum zweiten Dresch- und Abscheidekorb 8 abgestreift werden, so dass die Ähren beziehungsweise Körner nahe dem zweiten Dresch- und Abscheidekorb 8 von den Schlagleisten 21 erfasst werden und folglich mit geringerer Geschwindigkeit auf die entsprechenden Korbleisten 19 auftreffen.

### Bezugszeichenliste

- 1: Schneidwerk
- 2: Schrägförderer
- 3: Dreschvorrichtung
- 4: Vorbeschleunigungstrommel
- 5: Dreschtrommel
- 6: Strohwendetrommel
- 7: erster Dresch- und Abscheidekorb
- 8: zweiter Dresch- und Abscheidekorb
- 9: Vorbereitungsboden
- 10: Siebe
- 11: Gebläse
- 12: Hordenschüttler
- 13: Eintrittsbereich
- 14: zylindrischer Grundkörper
- 15: Mitnehmer
- 16: Wirkfläche
- 17: Korbleisten
- 18: Leiteinrichtung
- 19: Korbleisten
- 20: Stützscheiben
- 21: Schlagleisten
- 22: Strohleitblech
- 23: zylindrischer Grundkörper
- 24: Mitnehmer
- 25: Abstreifer
- 26: Abstreifer
- 27: Zinken
- 28: Führungskulisse
- 29: Halter
- 30: Flansche
- 31: Spitze
- 32: erster Abschnitt
- 33: Führungsabschnitt

## Patentansprüche

1. Dreschwerk eines Mähdreschers mit einer Vorbeschleunigungstrommel (4), die mit einem ersten Dresch- und Abscheidekorb (7) zusammenwirkt und der in einem Eintrittsbereich (13) ein Erntegutstrom zuführbar ist, wobei die Vorbeschleunigungstrommel (4) einen zylindrischen Grundkörper (14) mit auf dessen Außenmantel angeordneten, im Wesentlichen radial verlaufenden Mitnehmern (15) aufweist, die sowohl in axialer Richtung als auch in Umfangsrichtung des Grundkörpers (14) zueinander beabstandet sind und den Erntegutstrom tangential zu einem Austrittsbereich des ersten Dresch- und Abscheidekorbes (7) fördern, von dem aus der Erntegutstrom einer mit einem zweiten Dresch- und Abscheidekorb (8) zusammenwirkenden Dreschtrommel (5) zugeführt wird, **dadurch gekennzeichnet, dass** im Austrittsbereich des ersten Dresch- und Abscheidekorbes (7) ein mit Zinken (27) versehener, kammartig ausgebildeter Abstreifer (25) angeordnet ist, wobei jeder der Zinken (27) in einen axialen Zwischenraum zwischen jeweils zwei einander benachbarten Reihen von Mitnehmern (15) eingreift.

2. Dreschwerk eines Mähdreschers mit einer Strohwendetrommel (6), die einer Dreschtrommel (5) sowie einem dieser zugeordneten Dresch- und Abscheidekorb (8) nachgeschaltet ist und über die ein Gemisch aus Restkorn, Stroh und Spreu aus dem Dresch- und Abscheidekorb (8) einer Nachabscheideeinrichtung, vorzugsweise mehreren Hordenschüttlern (12) zuführbar ist, **dadurch gekennzeichnet, dass** die Strohwendetrommel (6) einen zylindrischen Grundkörper (23) mit auf dessen Außenmantel angeordneten, im Wesentlichen radial verlaufenden Mitnehmern (24) aufweist, die sowohl in axialer Richtung als auch in Umfangsrichtung des Grundkörpers (23) zueinander beabstandet sind, und dass ausgangsseitig der Strohwendetrommel (6) ein mit Zinken (27) versehener, kammartig ausgebildeter Abstreifer (26) angeordnet ist, wobei jeder der Zinken (27) in einen axialen Zwischenraum zwischen jeweils zwei einander benachbarten Reihen von Mitnehmern (24) eingreift.

3. Dreschwerk nach einem der Ansprüche 1 oder 2, **dadurch gekennzeichnet, dass** jeder der Zinken (27) eine sichelförmige Außenkontur aufweist und mit einem gekrümmten ersten Abschnitt (32) den zylindrischen Grundkörper (14 oder 23) an einem Teil seines Umfanges umgreift.

4. Dreschwerk nach Anspruch 1, **dadurch gekennzeichnet, dass** jeder der Zinken (27) einen von dessen Spitze (31) aus mit Abstand zu Korbleisten (17) des ersten Dresch- und Abscheidekorbes (7) verlaufenden Führungsabschnitt (33) aufweist.

5. Dreschwerk nach Anspruch 2, **dadurch gekennzeichnet, dass** jeder der Zinken (27) einen von dessen Spitze (31) aus mit Abstand zu einem Strohleitblech (22) verlaufenden Führungsabschnitt (33) aufweist.

6. Dreschwerk nach einem der Ansprüche 4 oder 5, **dadurch gekennzeichnet, dass** Wirkflächen (16) der Mitnehmer (15 oder 24) beim Passieren der Zinken (27) unter einem Winkel α ≥ 90° zum Führungsabschnitt (33) des jeweiligen Zinkens (27) verlaufen.

7. Dreschwerk nach Anspruch 3, **dadurch gekennzeichnet, dass** jeder der Zinken (27) mittels seines gekrümmten ersten Abschnitts (32) in eine den Außenmantel des ringförmigen Grundkörpers (14 oder 23) ringartig umschließende Führungskulisse (28) eingreift und in dieser geführt ist.

8. Dreschwerk nach einem der Ansprüche 1 oder 2, **dadurch gekennzeichnet, dass** die Zinken (27) auf einem rohrförmig ausgebildeten Halter (29) angeordnet sind.

9. Dreschwerk nach einem der Ansprüche 1 oder 2, **dadurch gekennzeichnet, dass** die Zinken (27) aus Kunststoff hergestellt sind.

10. Dreschwerk nach Anspruch 7, **dadurch gekennzeichnet, dass** der Halter (29) mittels an seinen Enden angeordneter Flansche (30) in Seitenverkleidungen des Dreschwerkes befestigbar ist.

## Claims

1. A threshing mechanism of a combine harvester comprising a pre-acceleration drum (4) which cooperates with a first threshing and separating concave (7) and to which a flow of crop material can be fed in an entry region, wherein the pre-acceleration drum (4) has a cylindrical main body (14) with substantially radially extending entrainment members (15) which are arranged on the outside peripheral surface thereof and which are spaced relative to each other both in the axial direction and also in the tangential direction of the main body (14) and which convey the flow of crop material tangentially to an exit region of the first threshing and separating concave (7), from which the flow of crop material is fed to a threshing drum (5) cooperating with a second threshing and separating concave (8), **characterised in that** a scraper (25) provided with teeth (27) and of a comb-like configuration is arranged in the exit region of the first threshing and separating concave (7), wherein each of the teeth (27) engages into an axial intermediate space between each two mutually adjacent rows of entrainment members (15).

2. A threshing mechanism of a combine harvester having a straw turning drum (6) disposed downstream of a threshing drum (5) and a threshing and separating concave (8) associated therewith and by way of which a mixture of residual grain, straw and chaff can be fed from the threshing and separating concave (8) to a post-separating device, preferably a plurality of straw walkers (12), **characterised in that** the straw turning drum (6) has a cylindrical main body (23) with substantially radially extending entrainment members (24) which are arranged on the outside peripheral surface thereof and which are spaced relative to each other both in the axial direction and also in the peripheral direction of the main body (23) and that arranged at the outlet side of the straw turning drum (6) is a scraper (26) provided with teeth (27) and of a comb-like configuration, wherein each of the teeth (27) engages into an axial intermediate space between each two mutually adjacent rows of entrainment members (24).

3. A threshing mechanism according to one of claims 1 and 2 **characterised in that** each of the teeth (27) is of a sickle-shaped outside contour and with a curved first portion (32) embraces the cylindrical main body (14 or 23) at a part of its periphery.

4. A threshing mechanism according to claim 1 **characterised in that** each of the teeth (27) has a guide portion (33) extending from its tip (31) at a spacing relative to the concave bars (17) of the first threshing and separating concave (7).

5. A threshing mechanism according to claim 2 **characterised in that** each of the teeth (27) has a guide portion (33) extending from its tip (31) at a spacing relative to a straw guide plate (22).

6. A threshing mechanism according to one of claims 4 and 5 **characterised in that** operative surfaces (16) of the entrainment members (15 or 24) extend when passing the teeth (27) at an angle α ≥ 90° relative to the guide portion (33) of the respective tooth (27).

7. A threshing mechanism according to claim 3 **characterised in that** each of the teeth (27) engages by means of its curved first portion (32) into a sliding guide (28) extending in an annular configuration around the outside peripheral surface of the annular main body (14 or 23) and is guided therein.

8. A threshing mechanism according to one of claims 1 and 2 **characterised in that** the teeth (27) are arranged on a holder (29) of tubular configuration.

9. A threshing mechanism according to one of claims 1 and 2 **characterised in that** the teeth (27) are made from plastic.

10. A threshing mechanism according to claim 7 **characterised in that** the holder (29) can be fixed in lateral claddings of the threshing mechanism by means of flanges (30) at the ends of the holder.

## Revendications

1. Mécanisme de battage d'une moissonneuse-batteuse comprenant un tambour de pré-accélération (4) qui coopère avec une première corbeille de battage et de séparation (7) et auquel un flux de produit de récolte peut être amené dans une zone d'entrée (13), le tambour de pré-accélération (4) présentant un corps de base cylindrique (14) avec des pièces d'entraînement (15) qui sont disposées sur sa surface extérieure et s'étendent sensiblement radialement et qui sont espacées les unes des autres aussi bien en direction axiale qu'en direction circonférentielle du corps de base (14) et transportent le flux de produit de récolte tangentiellement vers une zone de sortie de la première corbeille de battage et de séparation (7), d'où le flux de produit de récolte est amené à un tambour de battage (5) qui coopère avec une deuxième corbeille de battage et de séparation (8), **caractérisé en ce qu'**un racleur (25) pourvu de dents (27) et réalisé en forme de peigne est disposé dans la zone de sortie de la première corbeille de battage et de séparation (7), chacune des dents (27) s'engageant dans un espace axial situé entre deux rangées voisines de pièces d'entraînement (15).

2. Mécanisme de battage d'une moissonneuse-batteuse comprenant un tire-paille (6) placé après un tambour de battage (5) et une corbeille de battage et de séparation (8) associée à celui-ci, au moyen duquel un mélange de grain résiduel, de paille et de balle sortant de la corbeille de battage et de séparation (8) peut être amené à un dispositif de séparation secondaire, de préférence à plusieurs secoueurs à claies (12), **caractérisé en ce que** le tire-paille (6) présente un corps de base cylindrique (23) avec des pièces d'entraînement (24) qui sont disposées sur sa surface extérieure et s'étendent sensiblement radialement et qui sont espacées les unes des autres aussi bien en direction axiale qu'en direction circonférentielle du corps de base (23), et **en ce qu'**un racleur (26) pourvu de dents (27) et réalisé en forme de peigne est disposé du côté sortie du tire-paille (6), chacune des dents (27) s'engageant dans un espace axial situé entre deux rangées voisines de pièces d'entraînement (24).

3. Mécanisme de battage selon l'une des revendications 1 ou 2, **caractérisé en ce que** chacune des dents (27) présente un contour extérieur en forme de croissant et entoure par une première partie courbe (32) le corps de base cylindrique (14 ou 23) sur une partie de sa circonférence.

4. Mécanisme de battage selon la revendication 1, **caractérisé en ce que** chacune des dents (27) présente une partie de guidage (33) s'étendant à distance de contre-battes (17) de la première corbeille de battage et de séparation (7) à partir de sa pointe (31).

5. Mécanisme de battage selon la revendication 2, **caractérisé en ce que** chacune des dents (27) présente une partie de guidage (33) s'étendant à distance d'une tôle guide-paille (22) à partir de sa pointe (31).

6. Mécanisme de battage selon l'une des revendications 4 ou 5, **caractérisé en ce que**, au passage des dents (27), des surfaces actives (16) des pièces d'entraînement (15 ou 24) forment un angle α ≥ 90° avec la partie de guidage (33) de la dent (27) concernée.

7. Mécanisme de battage selon la revendication 3, **caractérisé en ce que** chacune des dents (27) s'engage au moyen de sa première partie courbe (32) dans une coulisse de guidage (28) entourant à la manière d'un anneau la surface extérieure du corps de base annulaire (14 ou 23) et est guidée dans celle-ci.

8. Mécanisme de battage selon l'une des revendications 1 ou 2, **caractérisé en ce que** les dents (27) sont disposées sur un support (29) réalisé en forme de tube.

9. Mécanisme de battage selon l'une des revendications 1 ou 2, **caractérisé en ce que** les dents (27) sont fabriquées en matière plastique.

10. Mécanisme de battage selon la revendication 7, **caractérisé en ce que** le support (29) peut être fixé dans des panneaux latéraux du mécanisme de battage au moyen de brides (30) disposées à ses extrémités.
